(19) Europäisches Patentamt
European Patent Office
Office européen des brevets

(11) EP 3 978 985 A1

(12) EUROPEAN PATENT APPLICATION

(43) Date of publication:
06.04.2022 Bulletin 2022/14

(21) Application number: 20199157.7

(22) Date of filing: 30.09.2020

(51) International Patent Classification (IPC):
G02B 26/08 (2006.01)        G03B 21/00 (2006.01)

(52) Cooperative Patent Classification (CPC):
G02B 26/0841; G02B 26/0808; G03B 21/008

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Imec VZW
3001 Leuven (BE)

(72) Inventors:
• SAITO, Daisuke
  3001 Leuven (BE)
• ROCHUS, Veronique
  3001 Leuven (BE)

(74) Representative: Roth, Sebastian
Mitscherlich PartmbB
Patent- und Rechtsanwälte
Sonnenstraße 33
80331 München (DE)

(54) **MIRROR SYSTEM FOR A PROJECTION APPARATUS**

(57) The invention relates to a mirror system (10) for a projection apparatus (60), wherein the projection apparatus (60) comprises a light source (61) and an aperture (62), wherein the mirror system (10) comprises a support surface (11) and a plurality of mirrors (12) arranged on the support surface (11), wherein each of the plurality of mirrors (12) is arranged to be tiltable between a first and a second tilting position, wherein the first and the second tilting positions are discrete positions, wherein each mirror (12) in the first tilting position is arranged to reflect a light beam (63) that is emitted from the light source (61) towards the aperture (62), wherein each mirror (12) in the second tilting position is arranged to reflect the light beam (63) that is emitted from the light source (61) away from the aperture (62), and wherein at least some of the mirrors (12) that are arranged in the second tilting position form a blazed grating for the light beam (63), wherein the angle at which the light beam (63) is reflected off the at least some of the mirrors (12) in the second tilting position corresponds to a blaze angle of the blazed grating.

Fig. 1

EP 3 978 985 A1

**Description**

TECHNICAL FIELD OF THE INVENTION

The present disclosure relates to a mirror system for a projection apparatus and to a projection apparatus comprising such a mirror system.

BACKGROUND OF THE INVENTION

Generally, a spatial light modulator (SLM) is a device, which spatially modulates a light beam, e.g. to generate an image. An example for an SLM is a video projector, which dynamically modulates a light beam to generate a video that can be projected onto a surface.

An SLM can use a digital mirror device (DMD) to modulate the light. A DMD comprises an array of mirrors, which can be individually deflected or tilted to achieve a certain light modulation. The mirrors are usually micro mirrors, which are MEMS components that are actuated electronically. In order to generate a specific image, certain mirrors of the array are set to an ON state, where they reflect the light beam onto the aperture, while other mirrors are set to an OFF state, where they reflect the light beam away from the aperture. Typically, each mirror of the mirror array corresponds to one pixel of the generated image.

The technical trend of SLMs with DMDs goes towards a fine pixel pitch of the image, which is achieved by mirror arrays with small mirror pitch, and a wide color gamut. At the same time, the fill factor of the mirror array should be kept as high as possible, i.e. the distance between the mirrors should be as small as possible. This can lead to several problems, such as a lower optical efficiency of the DMD and a lower contrast of the generated image.

In particular, it is difficult to prevent stray light and diffracted light from mirrors in the OFF state to reach the aperture, which can decrease the contrast of the generated image. Furthermore, it is difficult to achieve a high contrast for all of the three primary colors red, green and blue.

SUMMARY OF THE INVENTION

Thus, it is an objective to provide an improved mirror system for a projection apparatus and to provide an improved projection apparatus comprising such a mirror system. In particular, the above-mentioned disadvantages should be avoided.

The objective is achieved by the embodiments provided in the enclosed independent claims. Advantageous implementations of the embodiments of the invention are further defined in the dependent claims.

According to a first aspect, the present disclosure relates to a mirror system for a projection apparatus, wherein the projection apparatus comprises a light source and an aperture, wherein the mirror system comprises a support surface; and a plurality of mirrors arranged on the support surface; wherein each of the plurality of mirrors is arranged tiltable between a first and a second tilting position, wherein the first and the second tilting position are discrete positions; wherein each mirror in the first tilting position is arranged to reflect a light beam that is emitted from the light source onto the aperture; wherein each mirror in the second tilting position is arranged to reflect the light beam that is emitted from the light source away from the aperture; and wherein at least some of the mirrors that are arranged in the second tilting position form a Blazed grating for the light beam, wherein the angle at which the light beam is reflected off the at least some of the mirrors in the second tilting corresponds to a Blaze angle of the Blazed grating.

This achieves the advantage that the mirror system can generate an image with a high spatial resolution and a high contrast. In particular, the increased contrast is achieved by an efficiently focusing of the light that is reflected off the mirrors in the second tilting position away from the aperture. Some or all mirrors in the second tilting position are arranged to fulfill the Blazed condition for the incident light beam and, therefore, focus the reflected light on certain focusing points away from the aperture.

Preferably, the first tilting position corresponds to an ON state of each mirror, and the second tilting position corresponds to an OFF state of each mirror. In particular, each mirror in the ON state corresponds to a bright pixel, and each mirror in the OFF state corresponds to a dark pixel in an image that is generated by the projection apparatus.

Preferably, the mirror system comprises a mirror array. The plurality of mirrors may comprise all or a part of the mirrors of the mirror array. The mirror array can have a mirror pitch of less than 5 $\mu$m, in particular 4 $\mu$m, and/or a filling factor of more than 80%, in particular more than 90%, more particular more than 95%. In particular, some or all mirrors of the mirror array that are in the OFF state fulfill the Blazed condition for the light beam.

Preferably, mirrors in the second tilting position (OFF state) forming the Blazed grating for the light beam means that these mirrors fulfill the Blazed condition for the light beam. These mirrors can maximize the diffraction efficiency for a given diffraction order, such that a maximum optical power is concentrated in the diffraction order, while the optical power in the other orders is reduced. The mirrors in the OFF state that form the Blazed grating can be configured to focus the diffraction order with the maximum diffraction efficiency far away from the aperture. As a consequence, less unwanted diffraction light from mirrors in the OFF state reaches the aperture.

Preferably, the Blaze grating is formed by areas of the mirror array with adjacent OFF-mirrors that form an "OFF-mirror-grating" within the mirror array, for instance mirrors which create a coherent area of dark pixels in the generated image. In contrast, isolated OFF-mirrors that are surrounded by ON-mirrors, i.e. isolated dark pixels surrounded by bright pixels, might, for example, not contribute to the Blaze grating. In some cases, e.g. if there are no isolated OFF-mirrors and all OFF-mirrors are adjacent, all mirrors that are arranged in the second tilting position (OFF-state) might form the Blazed grating.

The projection apparatus can be a spatial light modulator (SLM), e.g. a video projector, and the mirror system can be a digital mirror device (DMD) of the SLM. The projection apparatus can comprise a light source, e.g. a laser or a phosphor hybrid light source.

Preferably, the first and the second tilting position are discrete positions, i.e. the tilting positions and the respective tilting angles are clearly defined.

In particular, each mirror in the second tilting position is arranged to reflect the light beam that is emitted from the light source onto a light absorption structure of the projection apparatus.

In an embodiment, the angle of the light beam that is reflected off the at least some of the mirrors in the second tilting position corresponds to a -nth order diffraction, in particular a -1st or -2nd order diffraction, of the Blazed grating. This achieves the advantage that light that is reflected off mirrors in the second tilting position is efficiently focused away from the aperture.

Preferably, the light beam is configured to emit a plurality of light beams with different colors, in particular red, green or blue. The at least some of the mirrors in the second tilting position can be configured to fulfill the Blazed condition for two or all the light beams that are emitted by the light source. In particular, the angle of the light beam that is reflected off the at least some of the mirrors in the second tilting position corresponds to a different order diffraction of the Blazed grating for each of the two or all light beams. This achieves the advantage that the contrast can be enhanced for all of the three primary colors (red, green and blue).

Preferably, the further Blaze grating is formed by areas of the mirror array with adjacent ON-mirrors that form an "ON-mirror-grating" within the mirror array, for instance mirrors which create a coherent area of bright pixels in the generated image.

In an embodiment, at least some of the mirrors which are arranged in the first tilting position form a further Blazed grating, wherein the angle at which the light beam is reflected off the at least some of the mirrors in the first tilting corresponds to a Blaze angle of the further Blazed grating. This achieves the advantage that the light from mirrors in the ON state can be efficiently focused on the aperture, which further increases the contrast of the generated image.

In an embodiment, the angle of the light beam that is reflected off the at least some of the mirrors in the first tilting position corresponds to an nth order diffraction, in particular a 2nd order diffraction, of the further Blazed grating. This achieves the advantage that the light from mirrors in the ON state can be efficiently focused on the aperture, which further increases the contrast of the generated image.

In an embodiment, each mirror of the plurality of mirrors has a quadrangle shape, in particular a square shape.

In an embodiment, the first and the second tilting position of each of the plurality of mirrors are asymmetrical to each other, especially relative to an axis that is perpendicular to the support surface. This achieves the advantage that the contrast can be further enhanced. In particular, the tilting angle of the mirrors in the OFF state can be adjusted more efficiently to fulfill the Blazed condition for the light beam.

In an embodiment, the tilting axis of each of the plurality of mirrors passes through or lies below the center of gravity of the mirror. This achieves the advantage that the contrast of the generated image can be further enhanced. In particular, the tilting axis passing through or lying below the center of gravity of the mirrors reduces the effect of unwanted misalignments and deviations on the tilting angles of the mirrors, thus, reducing the tilting angle variation of the mirrors, which has a positive effect on the contrast.

In particular, the tilting axis of each of the plurality of mirrors passing through or lying below the center of gravity of the mirror means that the horizontal tilting axis is perpendicular to a vertical symmetry axis passing through the center of gravity of the mirror.

In an embodiment, a mount is arranged on the support surface below each of the plurality of mirrors, wherein each of the plurality of mirrors is fixed to the support surface by the respective mount that is arranged below that mirror. This achieves the advantage that the mirrors can be efficiently mounted on the support surface.

In an embodiment, each of the plurality of mirrors comprises a hinge structure, in particular a hinge layer, on a bottom of the mirror, wherein the respective mount is fixed to the hinge structure of the mirror. This achieves the advantage that the mirrors can be efficiently tilted.

In an embodiment, a pair of actuation electrodes are arranged on the support surface below each of the plurality of mirrors, wherein the actuation electrodes below each mirror are configured to actuate the movement of the mirror from the first to the second tilting position and vice versa. This achieves the advantage that the tilting of each mirror can be efficiently controlled.

In an embodiment, the pair of actuation electrodes of each mirror are arranged on opposite sides and at equal distances to the tilting axis of the mirror.

In an embodiment, each of the plurality of mirrors comprises a spring element on an underside of the mirror, which preferably supports the movement of the mirror from the first to the second tilting position and vice versa. This achieves the advantage that less force, i.e. less energy, is required to actuate the movement of the mirrors. Further, the switching speed of the mirrors can be enhanced. In particular, the effect of stiction between the mirror and the support surface can be reduced.

Preferably, the spring element comprises one or more spring layers, which at least partially cover the underside of the mirror. In particular, the spring element and the hinge structure are made from the same layer. The spring element of each mirror can be arranged to be in physical contact with one of the stopper structures in the first respectively second tilting position.

According to a second aspect, the present disclosure relates to a projection apparatus, comprising a light source, an aperture and a mirror system according to the first aspect of the present disclosure.

This achieves the advantage that a projection apparatus can be provided that generates images with a high spatial resolution and a high contrast.

BRIEF DESCRIPTION OF THE DRAWINGS

The invention will be explained in the followings together with the figures.

Fig. 1          shows a schematic diagram of a mirror system according to an embodiment;

Fig. 2a         shows a schematic diagram of a section of a mirror system according to an embodiment;

Fig. 2b         shows a side view of a mirror according to an embodiment;

Figs. 3a-b      show intensity distributions of light that is reflected off a mirror system according to an embodiment;

Fig. 4          shows a schematic diagrams of mirrors according to an embodiment;

Fig. 5          shows a schematic diagram of a section of a mirror system according to an embodiment;

Figs. 6a-b      show a bottom view and a perspective view of the section from Fig. 5 according to an embodiment;

Fig. 7          shows a schematic diagram of a section of a mirror system according to an embodiment;

Figs. 8a-b      show a bottom view and a perspective view of the section from Fig. 7 according to an embodiment; and

Figs. 9         shows a schematic diagram of a projection apparatus according to an embodiment.

DETAILED DESCRIPTION OF THE PREFERRED EMBODIMENTS

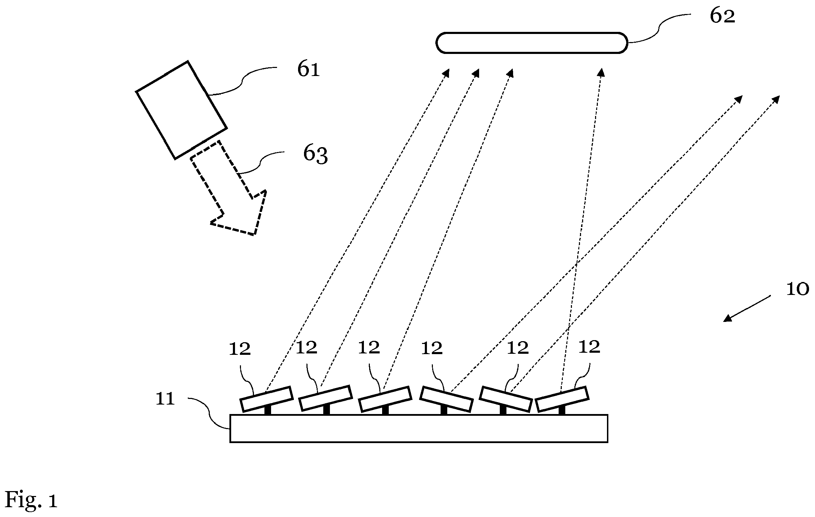

Fig. 1 shows a schematic diagram of a mirror system 10 according to an embodiment. The mirror system 10 is suitable for a projection apparatus, which comprises a light source 61 and an aperture 62.

The mirror system 10 comprises a support surface 11, and a plurality of mirrors 12 arranged on the support surface 11, wherein each of the plurality of mirrors 12 is arranged tiltable between a first tilting position and a second tilting position, wherein the first tilting position and the second tilting position are discrete positions. Each mirror 12 in the first tilting position is arranged to reflect a light beam 63 that is emitted from the light source 61 onto the aperture 62, and each mirror 12 in the second tilting position is arranged to reflect the light beam 63 that is emitted from the light source 61 away from the aperture 62.

Thereby, wherein at least some of the mirrors 12 that are arranged in the second tilting position form a Blazed grating for the light beam 63, wherein the angle at which the light beam 63 is reflected off the at least some of the mirrors 12 in the second tilting corresponds to a Blaze angle of the Blazed grating.

In particular, the Blazed grating is formed by a coherent set of mirrors in the second tilting position, e.g. a set of adjacent OFF-mirrors in the mirror system 10.

The mirrors 12 on the support surface 11 can form a mirror array, e.g. a square or a hexagonal array. The mirror array can have a mirror pitch of less than 5 $\mu$m, e.g. 4 $\mu$m, and/or a filling factor of more than 80%, in particular more than 90%, more particular more than 95%. In particular, the mirrors 12 of the mirror array that are in the second tilting position fulfill the Blazed condition for the light beam.

In particular, the first and the second tilting position are discrete positions, i.e. the tilting positions and the respective tilting angles are clearly defined. The tilting positions can be defined by a respective tilting angle relative to the axis that is perpendicular to the support surface.

In the exemplary embodiment of Fig. 1, the first three mirrors 12 from the left are arranged in the first tilting position, the fourth and fifth mirror 12 are arranged in the second tilting position, and the sixth mirror 12 is again arranged in the first tilting position. The first tilting position can correspond to an ON state of the mirrors 12, and the second tilting position can correspond to an OFF state of the mirrors 12. In particular, each mirror 12 in the ON state corresponds to a bright pixel, and each mirror 12 in the OFF state corresponds to a dark pixel in an image that is generated on a screen behind the aperture 62.

Preferably, mirrors 12 in the second tilting position (OFF state) forming the Blazed grating for the light beam 63 means that these mirrors fulfill the Blazed condition for the light beam 63. These mirrors can maximize the diffraction efficiency for a given diffraction order, such that a maximum optical power is concentrated in the diffraction order, while the optical power in the other orders is reduced.

The mirrors 12 in the OFF state that form the Blazed grating can be configured to focus the diffraction order with the maximum diffraction efficiency far away from the aperture. As a consequence, less unwanted diffraction light from mirrors in the OFF state reaches the aperture.

In particular, the at least some of the mirrors in the second tilting position that form the Blaze grating might refer to mirrors 12 in the second tilting position that are adjacent, i.e. mirrors that form an coherent area of mirrors 12 in the OFF-state within the mirror array.

In an optional embodiment, at least some of the mirrors in the ON state also fulfill the Blazed condition for the light of the incident light beam 63, i.e. they form a further Blazed grating for the light beam 36. The angle at which the light is reflected off the at least some mirrors in the ON state can correspond to a Blaze angle of the further Blazed grating. The mirrors in the ON state can be arranged such that this reflection is focused on the aperture.

The inclination of each mirror 12 in the first tilting position to the mirror 12 in the second tilting position can be at least 10°, preferably at least 20°. In particular, the larger this inclination, the better diffractions and stray light from the mirrors 12 in the OFF state can be deflected from the aperture 62.

In particular, further optical elements, such as lenses, prisms, mirrors, filters or optical integrators, which are not shown in Fig. 1, can be arranged between the light source 61 and the mirror system 10 and/or between the mirrors system 10 and the aperture 62, in order to efficiently guide the light between these components.

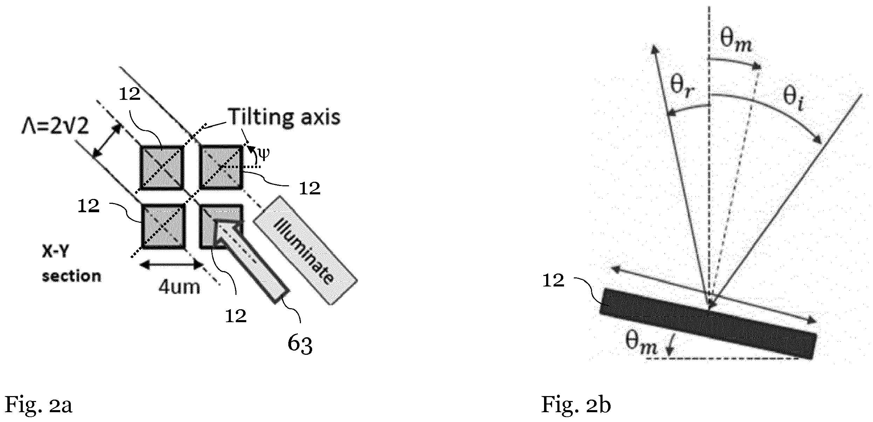

Fig. 2a shows a schematic diagram of a section of the mirror system 10 according to an embodiment.

The section in Fig. 2a comprises four quadratic mirrors 12, which are arranged in a square array with a pitch A (pitch from diagonal-to-diagonal) of $2\sqrt{2}$ $\mu$m. The gap in-between the mirrors 12 can be 0,16 $\mu$m.

The mirrors 12 are tiltable, wherein the tilting axis is parallel to a diagonal of the mirrors. The mirrors 12 are further illuminated at an angle of 90° to their tilting axis.

Fig. 2b shows a side view of a mirror 12 according to an embodiment. In particular, the mirror 12 in Fig. 2b corresponds to one of the mirrors 12 from Fig. 2a.

The mirror 12 is tilted with tilting angle of $\theta_m$. This tilting angle may correspond to the ON or OFF state of the mirror 12.

Fig. 2b shows that an incident light beam 63 with an incident angle of $\theta_i$ is reflected off the mirror with a reflection angle of $\theta_r$, wherein the reflection angle $\theta_r$ depends on the incident angle $\theta_i$ and the tilting angle $\theta_m$, according to the following relation:

$$\theta_r = 2\theta_m - \theta_i$$

The reflection intensity (I) can be expressed as function of the angle ($\theta$) according to the following envelope function:

$$I = \mathrm{sinc}\left(\frac{\pi L_m}{\lambda}\left(\sin\theta - \sin\theta_r\right)\right)^2$$

Thereby, $L_m$ is the (diagonal) length of the mirror 12 and $\lambda$ is the wavelength of the incident light beam 63.

In a three-dimensional space, the incident and the reflected light beam can be expressed by the two angle components $\theta$ and $\Psi$, and the above formula for the intensity is expanded to the following envelope function:

$$I = \text{sinc}\left(\frac{\pi L_m}{\lambda}\left(\sin\theta - \sin\theta_r\right)\right)^2 \cdot \text{sinc}\left(\frac{\pi L_m}{\lambda}\left(\sin\psi - \sin\psi_r\right)\right)^2$$

In particular, $\Psi$ is the rotation angle, e.g. 45° in Fig. 2a, and $\theta$ is the elevation angle as indicated in Fig. 2b.

The $n_{th}$ diffraction angle of such an array can be written as:

$$\theta_n = \sin^{-1}\left(\frac{n\lambda}{\Lambda} - \sin\theta_i\right)$$

In particular, the Blaze condition is fulfilled when a diffraction peak is in the middle of the reflection envelop in $\text{sinc}^2$.

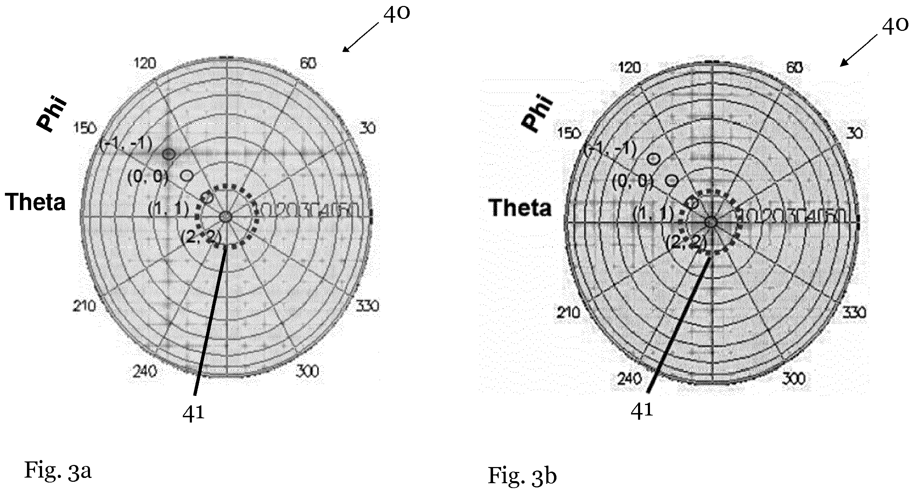

Figs. 3a-b show intensity distributions 40 of light that is reflected off the mirror system 10 according to an embodiment. In particular, Fig. 3a and 3b are top views of 2D hemispheres that depict the spatial distributions of intensity of light that is reflected from a mirror array in the center of the hemisphere. The mirror array can comprise a plurality of mirrors according to the section shown in Fig. 2a.

The circle 41 in the center of the intensity distributions 40 shows the detection cone. For instance, light that is reflected within this circle 41 reaches the passes through an optical axes of the aperture.

The light can have a wavelength in the green color range, e.g. 532 nm.

Fig. 3a shows the intensity distributions 40 of light that is reflected off mirrors 12 in the OFF state. Thereby, the light that is reflected of these mirrors corresponds to the - 1st Blaze diffraction, indicated by (-1, -1) in Fig. 3a. In other words, the primary diffraction of the mirrors 12 in the OFF state is the same direction as the light reflection. The reflected light is thereby directed away from the aperture.

Alternative, the mirrors 12 in the OFF state can be arranged such that the light that is reflected of these mirrors 12 corresponds to the -2nd or another Blaze diffraction

Fig. 3b shows the intensity distributions 40 of light that is reflected off mirrors 12 in the ON state. Thereby, the light that is reflected of these mirrors corresponds to the 2nd Blaze diffraction, indicated by (2, 2) in Fig 3b, and is directed at the aperture 62. In other words, the primary diffraction and light reflection pass through the optical-axis of the projection lens.

Alternative, the mirrors 12 in the ON state can be arranged such that the light that is reflected of these mirrors 12 corresponds to a higher order of the Blaze diffraction

In particular, the mirrors 12 of the system 10 can be configured to fulfill the Blazed condition for light beams of different colors in the ON and/or the OFF state. For instance, for a light beam in the red color range, .e.g. at 638 nm, the mirrors in the ON state can be arranged such that reflection light with the 2nd order Blazed condition goes through the optic axis of the aperture 62, and/or the mirrors in the OFF state can be arranged such that the reflected light corresponds to the -1st or -2nd order Blazed.

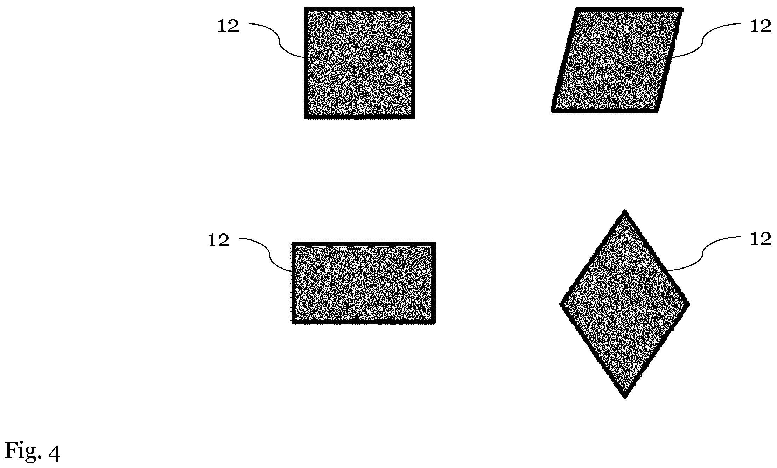

Fig. 4 show a schematic diagrams of mirrors 12 according to an embodiment. In particular, Fig. 4 shows possible shapes of the mirrors 12 of the system 10 in Fig. 1.

In particular, each mirror 12 of the plurality of mirrors 12 of the system 10 has a quadrangle shape. Preferably, the mirrors 12 have a square shape.

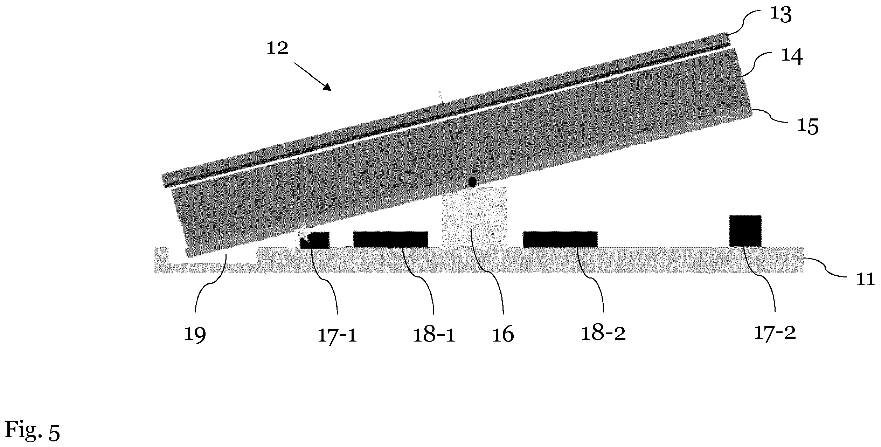

Fig. 5 shows a schematic diagram of a section of the mirror system 10 according to an embodiment. The depicted section comprises a single mirror 12 of the system 10. In particular, each mirror 12 of the mirror system 10 in Fig. 1 might be configured according to the mirror 12 shown in Fig. 5.

The mirror 12 can formed by several material layers. Preferably, the mirror comprises a substrate layer 14, a reflective mirror layer 13 on top of the substrate layer 14 and a bottom layer 15 on the underside of the substrate layer 14.

The mirror 12 can be fixated to the support surface 11 via a mount 16 that is arranged on the support surface 11 below the mirror 12. Preferably, the mount 16 is aligned to the center of gravity of the mirror 12, i.e. a central axis of the mount is directly arranged below the center of gravity of the mirror 12. The mirror 12 can comprise a hinge structure (not shown in Fig. 2) for fixing the mount 16 to mirror 12 in such a way that the mirror can be tilted around the mount 16.

Two stopper structures 17-1, 17-2 may be arranged on the support surface 11 below the mirror 12. In particular, these stopper structures 17-1,17-2 form landing structures for the tillable mirror 12. In the tilting position shown in Fig. 2, which can correspond to the ON state, the mirror 12 is in physical contact with the left stopper structure 17-1. In the other tilting position (OFF state), the mirror 12 is in physical contact with the right stopper structure 17-2. In particular, the geometry and/or exact position of the stopper structures 17-1, 17-2 defines the tilting angles and, thus, the first and second tilting positon of the mirror 12.

Preferably, at least one of the stopper structures 17-1, 17-2 is arranged below an edge or a corner of the mirror 12 to allow the biggest possible deflection of the mirror 12.

As shown in Fig. 2, the two stopper structures 17-1, 17-2 can have a different height and/or can be arranged at a different distances from the tilting axis of the mirror 12.

For example, the left stopper structure 17-1 in Fig. 2 has a height of 0.1 $\mu$m and the right stopper structure 17-2 has a height of 0.23 $\mu$m. This asymmetry between the height and/or position of the stopper structures 17-1, 17-2 can cause an asymmetry between the first and second tilting position, especially relative to an axis that is perpendicular to the support surface.

Generally, the geometry and position of the stopper structures 17-1, 17-2 can be controlled with high accuracy during a fabrication process. Thus, deviations between the tilting angles of the mirrors 12 of the system 10 due to deviations between their respective stopper structures 17-1, 17-2 maybe reduced to less than 0.1°.

In particular, the stopper structures 17-1, 17-2 can be stopper electrodes and/or posts.

As further shown in Fig. 2, a recess 19 can be arranged in the support surface 11 below the mirror 12, wherein an edge of the tilted mirror 12 in Fig. 2 partially sinks into the recess 19. This recess 19 allows for a greater deflection of the mirror 12 and further enhances the asymmetry between the first and the second tilting position. Preferably, the recess is a groove or a step in the support surface 11.

To actuate the movement of the mirror 12 from the first to the second tilting position and vice versa, a pair of actuation electrodes 18-1, 18-2 can be arranged on the support surface 11 below the mirror 12.

The actuation electrodes 18-1, 18-2 can be configured to actuate the mirror 12 movement via electrostatic force. The electrostatic force can be generated by applying a voltage between one or both actuation electrodes 18-1, 18-2 and the mirror 12. The voltage can be a bias voltage of ca. 36 V. The required voltage can depend on the size and position of the actuation electrodes 18-1, 18-2 and/or the size and arrangement of the mirror 12. In particular, to amplify the effect of the applied voltage, the actuation electrodes 18-1, 18-2 should be designed as big as possible. The mirror 12 can comprise an electrically conductive layer, e.g. the bottom layer 15 forms or comprises the electrically conductive layer, which is at least arranged in an area above the actuation electrodes 18-1, 18-2. The electrically conductive layer can be electrically connected to the hinge structure on the bottom of the mirror.

Preferably, the actuation electrodes 18-1, 18-2 are arranged on opposite sides and at equal distances to the tilting axis of the mirror 12, i.e. the actuation electrodes 18-1, 18-2 are arranged symmetrically with respect to the mirror 12. This achieves the advantage that the same pull on the mirror 12 for a certain applied voltage can be achieved in the ON and the OFF state of the mirror 12.

Optionally, the mirror 12 comprises a spring element (not shown) on its underside, which supports the movement of the mirror 12 from the first to the second tilting position and vice versa. The spring element can be arranged to initiate physical contact with the stopper structures 17-1, 17-2 in the first and second tilting position, respectively. Thereby, energy can be built up by a deformation of the spring element. This energy can be released if the mirror changes its position, in order to support the movement of the mirror 12. For instance, the spring element is a layer, which at least partially covers the underside of the mirror 12.

In particular, the mirror system 10 shown in Fig. 1 might comprise the mount 16, the stopper structures 17-1, 17-2, the actuation electrodes 18-1, 18-2 and/or the recess 19 as shown in Figs. 2, 3a and 3b below each mirror 12.

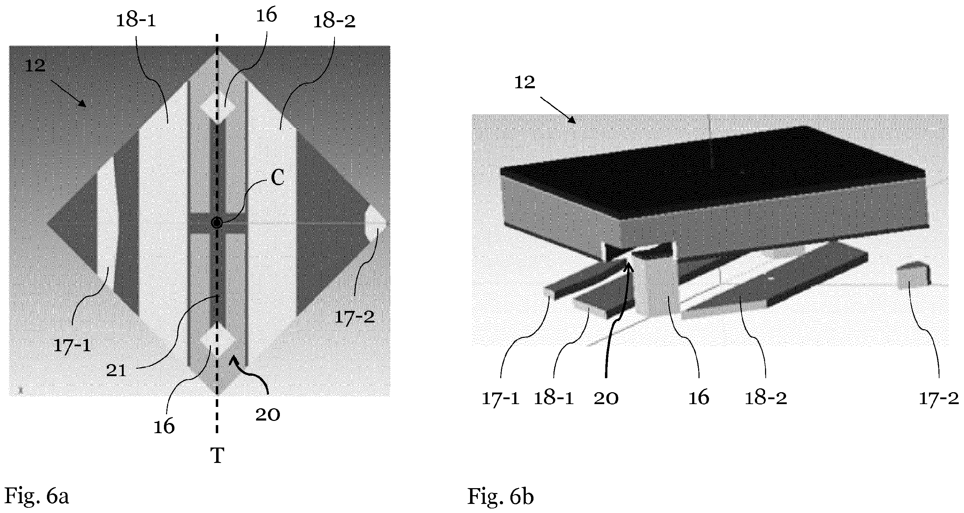

Figs. 6a-b show a bottom view and a perspective view of the section of the mirror system 10 from Fig. 5 according to an embodiment. Thereby, the support surface 11 below the mirror 12 is omitted.

Fig. 6a shows that the mount 16 may comprise two pillars that are attached to a hinge structure 21 of the mirror 12. The hinge structure 21 can be a hinge layer on the bottom of the mirror 12.

The mirror 12 can have a quadratic shape, and the pillars of the mount 16 can be arranged below the mirror along a diagonal connecting line between two opposite corners of the mirror 12. In this configuration, the tilting axis T of the mirror 12 is congruent to this diagonal connecting line and passes through or lies below the center of gravity C of the mirror 12.

For example, the quadratic mirror 12 has a size of 4x4 $\mu$m, is arranged at ca. 0.2 $\mu$m above the support surface and has a gap of 0.57 $\mu$m to a neighboring mirror 12 in the mirror system 10.

The perspective view of the mirror in Fig. 6b shows that the mirror 12 can have a groove or cavity 20 on the bottom of the mirror, wherein the attachment point of the mount 16 is arranged in or below the cavity 21 on the bottom of the mirror 12. For instance, the cavity 20 is a channel that runs along the diagonal connecting line. This cavity 20 can facilitate the tilting of the mirror 12 around the hinge structure 21 by preventing the mirror 12 from pushing against the mount 16 during tilting.

The hinge structure 21 can at least partially be arranged in the cavity 20. In the particular, the hinge structure 21 is designed to align the tilting axis T such that it passes through the center of gravity C of the mirror.

In particular, the mirror system 10 shown in Fig. 1 might comprise the mount 16, the stopper structures 17-1, 17-2, the actuation electrodes 18-1, 18-2 and/or the recess 19 as shown in Figs. 2, 3a and 3b below each mirror 12.

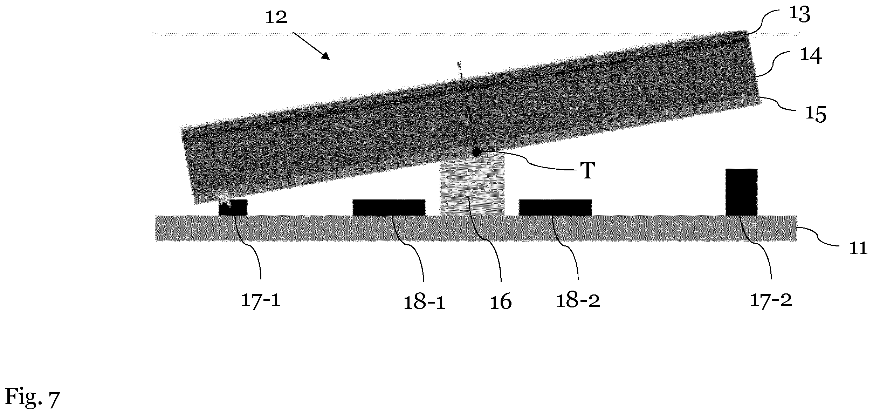

Fig. 7 shows a schematic diagram of a section of the mirror system 10 according to a further embodiment. The depicted section comprises a single mirror 12 of the system 10. In particular, each mirror of the mirror system 10 in Fig.

1 might be configured according to the mirror shown in Fig. 7.

In the exemplary embodiment of Fig. 7, the support surface 11 comprises no recess 19. Instead, both stopper structures 17-1, 17-2 are arranged symmetrically at equal distances to the tilting axis and/or the mount 16 of the mirror 12. Depending on the fabrication process of the mirror system 10, this additional symmetry might further reduce unwanted variations between the tilting angles of the mirrors 12 in the system 10.

To enhance the asymmetry between the ON and the OFF state of the mirror 12, the height difference between the stopper structures 17-1, 17-2 can be increased compared to the embodiment of Fig. 2. For instance, the left stopper structure 17-1 has a height of 0.1 $\mu$m and the right stopper structure 17-2 has a height of 0.36 $\mu$m

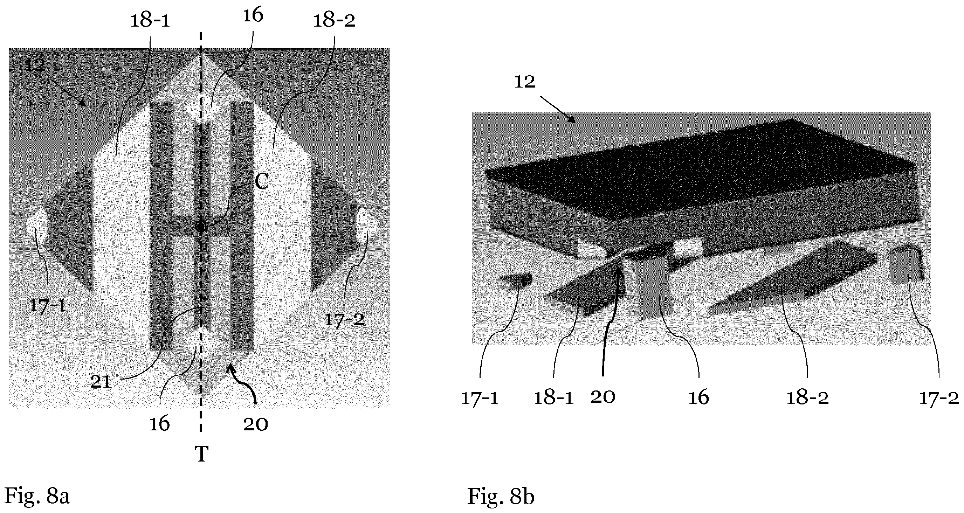

Figs. 8a-b show a bottom view and a perspective view of the section of the mirror system from Fig. 7 according to an embodiment. Thereby, the support surface 11 below the mirror 12 is omitted.

In particular, the mirror system 10 shown in Fig. 1 might comprise the mount 16, the stopper structures 17-1, 17-2 and/or the actuation electrodes 18-1, 18-2 as shown in Figs. 7, 8a and 8b below each mirror 12.

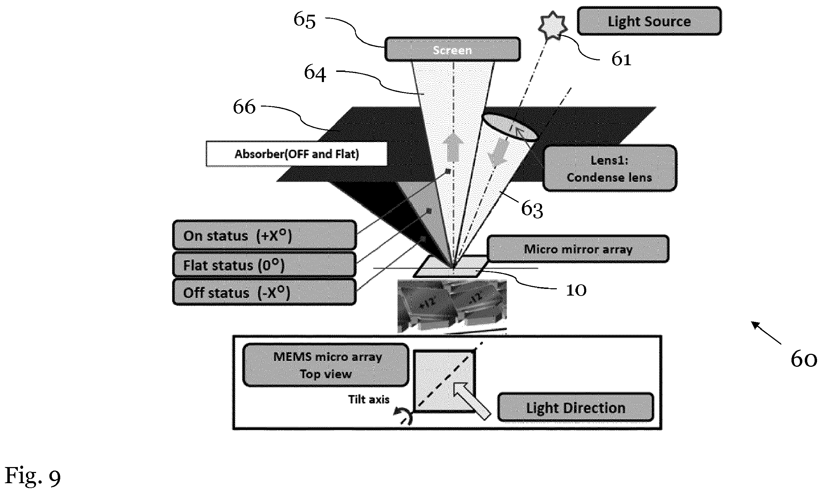

Fig. 9 shows a schematic diagrams of a projection apparatus 60 according to an embodiment.

The projection apparatus 60 comprises the light source 61, the aperture (not shown in Fig. 9) and the mirror system 10 as, for example, shown in Fig. 1. For instance, the projection apparatus 60 is a spatial light modulator (SLM), e.g. a video projector, and the mirror system 10 is a digital mirror device (DMD) of the SLM. The projection apparatus 60 may comprise a processing unit (not shown) that is configured to control the operation of the mirrors 12 of the mirror system 10.

Fig. 9 shows the reflection of the light beam from the mirrors 12 of the mirror system 10 that are in the ON state (tilting of +X°) and in the OFF state (tilting of -X°).

Preferably, the light source 61 is configured to emit the light beam 63 towards the mirror system 10. A condenser lens can be arranged in front of the light source 61 to focus the light beam 63 onto the mirrors 12. In particular, the light source 61 can be configured to emit red, green and blue light.

As shown in Fig. 9, the mirrors 12 of the system 10 that are arranged in the ON state reflect the light onto the aperture. The aperture can be projection lens, which is configured to project an image based on a light beam 64 that is reflected from mirrors 12 in the ON sate onto a screen 65. In particular, the reflected light beam 64 from the mirrors 12 in the ON state aligns with an optical axis of the projection apparatus 60. The mirrors 12 in the ON state are, for example, tilted at a tilting angle of +12° (relative to an axis that is perpendicular to the support surface 11 of the mirror system 10).

In contrast, the mirrors 12 of the system 10 that are arranged in the OFF state reflect the light away from the aperture and onto an absorption structure 66 of the projection apparatus 60. The mirrors 12 in the OFF state are, for example, tilted at a tilting angle that is asymmetric to the tilting angle of mirrors in the ON state, e.g. smaller or larger than -12° (relative to an axis that is perpendicular to the support surface). For instance, the tilting angle of mirrors 12 in the OFF state is -8°.

Fig. 9 also shows that mirrors in a flat state, i.e. mirror that are arranged between the ON and OFF sate with a tilting angle of 0°, would reflect the light in a in a direction between the reflection direction of the mirrors 12 in the ON and the reflection direction of the mirrors 12 in the OFF state.

**Claims**

1. A mirror system (10) for a projection apparatus (60), wherein the projection apparatus (60) comprises a light source (61) and an aperture (62), wherein the mirror system (10) comprises:

   a support surface (11); and
   a plurality of mirrors (12) arranged on the support surface (11);
   wherein each of the plurality of mirrors (12) is arranged tiltable between a first and a second tilting position, wherein the first and the second tilting position are discrete positions;
   wherein each mirror (12) in the first tilting position is arranged to reflect a light beam (63) that is emitted from the light source (61) onto the aperture (62);
   wherein each mirror (12) in the second tilting position is arranged to reflect the light beam (63) that is emitted from the light source (61) away from the aperture (62); and
   wherein at least some of the mirrors (12) that are arranged in the second tilting position form a Blazed grating for the light beam (63), wherein the angle at which the light beam (63) is reflected off the at least some of the mirrors (12) in the second tilting corresponds to a Blaze angle of the Blazed grating.

2. The mirror system (10) of claim 1, wherein the angle of the light beam (63) that is reflected off the at least some of the mirrors (12) in the second tilting position corresponds to a $-n$th order diffraction, in particular a $-1$st or $-2$nd order diffraction, of the Blazed grating.

3. The mirror system (10) of any one of the preceding claims, wherein at least some of the mirrors (12) which are arranged in the first tilting position form a further Blazed grating, wherein the angle at which the light beam (63) is reflected off the at least some of mirrors (12) in the first tilting corresponds to a Blaze angle of the further Blazed grating.

4. The mirror system (10) of claim 3, wherein the angle of the light beam (63) that is reflected off the at least some of the mirrors (12) in the first tilting position corresponds to an $n^{th}$ order diffraction, in particular a $2^{nd}$ order diffraction, of the further Blazed grating.

5. The mirror system (10) of any one of the preceding claims, wherein each mirror (12) of the plurality of mirrors (12) has a quadrangle shape, in particular a square shape.

6. The mirror system (10) of any one of the preceding claims, wherein the first and the second tilting position of each of the plurality of mirrors (12) are asymmetrical to each other, especially relative to an axis that is perpendicular to the support surface (11).

7. The mirror system (10) of any one of the preceding claims, wherein the tilting axis (T) of each of the plurality of mirrors (12) passes through or lies below the center of gravity (C) of the mirror (12).

8. The mirror system (10) of any one of the preceding claims, wherein a mount (16) is arranged on the support surface (11) below each of the plurality of mirrors (12), wherein each of the plurality of mirrors (12) is fixed to the support surface (11) by the respective mount (16) that is arranged below that mirror (11).

9. The mirror system (10) of claim 8, wherein each of the plurality of mirrors (12) comprises a hinge structure (21), in particular a hinge layer, on a bottom of the mirror (12), wherein the respective mount (16) is fixed to the hinge structure (21) of the mirror (12).

10. The mirror system (10) of any one of the preceding claims, wherein a pair of actuation electrodes (18-1, 18-2) are arranged on the support surface (11) below each of the plurality of mirrors (12), wherein the actuation electrodes (18-1, 18-2) below each mirror (12) are configured to actuate the movement of the mirror (12) from the first to the second tilting position and vice versa.

11. The mirror system (10) of claim 10, wherein the pair of actuation electrodes (18-1, 18-2) of each mirror (12) are arranged on opposite sides and at equal distances to the tilting axis (T) of the mirror (12).

12. The mirror system (10) of any one of the preceding claims, wherein each of the plurality of mirrors (12) comprises a spring element on an underside of the mirror (12), which preferably supports the movement of the mirror (12) from the first to the second tilting position and vice versa.

13. A projection apparatus (60), comprising a light source (61), an aperture (62) and a mirror system (10) of any one of the preceding claims.

Fig. 1

Fig. 2b

Fig. 2a

Fig. 3b

Fig. 3a

Fig. 4

Fig. 5

Fig. 6b

Fig. 6a

Fig. 7

Fig. 8a

Fig. 8b

Light Source

61

Lens1: Condense lens

Micro mirror array

10

Screen

Absorber(OFF and Flat)

On status (+X°)

Flat status (0°)

Off status (-X°)

MEMS micro array
Top view

Light Direction

Tilt axis

63

64

65

66

60

Fig. 9

18

Europäisches
Patentamt

European
Patent Office

Office européen
des brevets

# EUROPEAN SEARCH REPORT

Application Number

EP 20 19 9157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/160784 A1 (KURTZ ANDREW F [US] ET AL) 14 June 2018 (2018-06-14) | 1-4,6-9, 13 | INV. G02B26/08 |
| Y | * paragraph [0007] - paragraph [0034]; figures 1, 2, 3a-b * | 5,10-12 | G03B21/00 |
| Y | US 2009/161193 A1 (MAEDA YOSHIHIRO [JP] ET AL) 25 June 2009 (2009-06-25) * paragraph [0146] - paragraph [0147]; figures 3c, 4c, 10, 11a-b, 13a-c * | 5,10,11 | |
| Y | US 2012/127558 A1 (HASPESLAGH LUC [BE] ET AL) 24 May 2012 (2012-05-24) * figure 1 * | 12 | |

TECHNICAL FIELDS
SEARCHED (IPC)

G02B
G03D
G03B

The present search report has been drawn up for all claims

| Place of search | Date of completion of the search | Examiner |
|---|---|---|
| Munich | 1 March 2021 | Denner, Peter |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 19 9157

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2021

| Patent document cited in search report | | Publication date | Patent family member(s) | | | Publication date |
|---|---|---|---|---|---|---|
| US 2018160784 | A1 | 14-06-2018 | CA | 2901780 | A1 | 18-09-2014 |
| | | | CA | 3068678 | A1 | 18-09-2014 |
| | | | CN | 105190405 | A | 23-12-2015 |
| | | | CN | 110456499 | A | 15-11-2019 |
| | | | EP | 2972556 | A1 | 20-01-2016 |
| | | | JP | 6224219 | B2 | 01-11-2017 |
| | | | JP | 2016517029 | A | 09-06-2016 |
| | | | US | 2016033757 | A1 | 04-02-2016 |
| | | | US | 2018160784 | A1 | 14-06-2018 |
| | | | WO | 2014142967 | A1 | 18-09-2014 |
| US 2009161193 | A1 | 25-06-2009 | CN | 102239437 | A | 09-11-2011 |
| | | | US | 2009161193 | A1 | 25-06-2009 |
| | | | WO | 2009085028 | A2 | 09-07-2009 |
| US 2012127558 | A1 | 24-05-2012 | EP | 2453289 | A1 | 16-05-2012 |
| | | | US | 2012127558 | A1 | 24-05-2012 |

EPO FORM P0459

For more details about this annex : see Official Journal of the European Patent Office, No. 12/82